# FASCICULE DE BREVET EUROPEEN

(11) **EP 0 950 274 B1**
(45) Date de publication et mention de la délivrance du brevet: **04.06.2003**
(21) Numéro de dépôt: 98952835.1
(22) Date de dépôt: 02.11.1998
(51) Int. Cl.: H01S 3/036

(54) **DISPOSITIF DE LASER A GAZ ET MOYENS DE PURIFICATION DE GAZ INTEGRES**
GASLASERVORRICHTUNG UND INTEGRIERTE MITTEL ZUR GASREINIGUNG
GAS LASER DEVICE AND INTEGRATED GAS PURIFYING MEANS

(30) Priorité: 03.11.1997 FR 9713793
(43) Date de publication de la demande: 20.10.1999
(73) Titulaire: COMMISSARIAT A L'ENERGIE ATOMIQUE, 75015 Paris Cédex 15 (FR); SOPRA - SOCIETE DE PRODUCTION ET DE RECHERCHES APPLIQUEES, F-92270 Bois-Colombes (FR)
(72) Inventeur: RAVEX, Alain, F-38240 Meylan (FR); LABORDE, Patrick, F-95530 La Frette/Seine (FR); STEHLE, Robert, F-92250 La Garenne (FR)
(74) Mandataire: Poulin, Gérard
(86) Numéro de dépôt international: FR9802340
(87) Numéro de publication internationale: WO99023732

(56) Documents cités:
- EP-A- 0 430 411
- EP-A- 0 516 919
- WO-A-91/18433
- WO-A-93/11065

## Description

### Domaine technique

La présente invention concerne un dispositif de laser à gaz actif comportant des moyens intégrés de purification du gaz actif.

On distingue plusieurs catégories de lasers à gaz en fonction de leur sensibilité aux conditions de fonctionnement et en fonction de la dégradation plus ou moins rapide de leur milieu actif (gaz).

Une première catégorie comporte les lasers à gaz scellés, pour lesquels le fonctionnement et les conditions de fonctionnement ne modifient pas ou ne modifient que très peu les caractéristiques du ou des gaz actifs.

Les performances de ce type de lasers sont très stables dans le temps et aucune intervention sur le milieu actif n'est requise.

Dans cette première catégorie on peut citer, par exemple, les lasers HeNe, les lasers CO₂ à guide d'onde, ainsi que les lasers à argon ou krypton, de faibles puissances.

Une deuxième catégorie comporte les lasers à gaz scellés pour lesquels le fonctionnement et les conditions de fonctionnement modifient lentement les caractéristiques du gaz ou des gaz actifs. Ces lasers ne nécessitent que peu d'interventions techniques sur le milieu actif.

Dans la deuxième catégorie on peut citer, par exemple, les lasers à argon ou krypton avec une puissance de sortie de l'ordre du Watt. Pour ces lasers une intervention est nécessaire après 1 000 à 2 000 heures de fonctionnement. Généralement la tête scellée de ces lasers est remplacée.

On distingue enfin une troisième catégorie de lasers pour lesquels le fonctionnement et les conditions de fonctionnement altèrent rapidement le mélange gazeux actif. Le milieu amplificateur de ces lasers doit donc être régénéré fréquemment.

Dans la troisième catégorie on peut citer les lasers CO₂ de forte puissance (kilowatt) ainsi que les lasers à excimère.

Les lasers à excimère demandent une intervention par semaine environ, et les performances de ces lasers se dégradent continuellement entre deux interventions.

Pour les lasers de la troisième catégorie, on peut travailler en gaz perdu ou renouveler à convenance tout ou partie du mélange gazeux. Certains milieux actifs peuvent aussi être purifiés et régénérés.

Le dispositif de l'invention s'applique donc plus particulièrement aux lasers dont le milieu actif peut être régénéré, notamment par purification des gaz contenus dans l'enceinte du laser.

### Etat de la technique antérieure

L'état de la technique est décrit ci-après par rapport aux lasers à excimère qui font partie de la troisième catégorie mentionnée ci-dessus.

Un laser à excimère est un laser à gaz capable d'émettre une lumière dans le domaine spectral des ultraviolets, dans un mode pulsé.

Une cavité d'un tel laser comprend un mélange gazeux qui constitue un milieu amplificateur et qui produit l'effet laser. Ce mélange comporte pour l'essentiel un composé halogène (fluor/chlore) sous forme moléculaire, un gaz rare tel que le krypton, le xénon ou l'argon, ainsi qu'un gaz tampon tel que le néon ou l'hélium par exemple.

Le rendement énergétique du laser et la qualité du faisceau laser émis dépendent d'un certain nombre paramètres et de conditions de fonctionnement parmi lesquels on peut citer les pressions partielles des différents gaz du mélange gazeux et l'excitation du milieu amplificateur (mélange gazeux).

Une préionisation, effectuée par un rayonnement X ou ultraviolet, ou par une prédécharge à effet corona, par exemple, contribue au contrôle de la décharge électrique de pompage c'est-à-dire au contrôle de l'excitation du milieu amplificateur.

Un autre paramètre important pour obtenir un bon rendement énergétique et un faisceau de bonne qualité est la pureté des gaz du milieu amplificateur.

La pureté des gaz du milieu amplificateur, contenus dans une enceinte, peut être affectée par des réactions chimiques. Ces réactions ont lieu, par exemple, entre les composés halogènes excités et les parois de l'enceinte.

De plus, il apparaît que les éléments d'étanchéité de la cavité laser peuvent également constituer des sources de pollution du milieu amplificateur.

La qualité des gaz du milieu amplificateur peut enfin être altérée par des combinaisons chimiques parasites. De nouvelles molécules, formées par combinaison chimique de différentes molécules du mélange, sont susceptibles d'absorber le rayonnement et donc de restreindre les performances du laser.

Pour empêcher une baisse de la qualité du faisceau laser, (stabilité en amplitude, uniformité du faisceau, énergie) et du rendement de la cavité laser, il est possible soit de renouveler les gaz du milieu actif, notamment par l'apport de nouveaux composés halogènes, soit d'éliminer dans le mélange gazeux les gaz indésirables.

En particulier, un certain nombre de molécules halogénées indésirables apparaissant dans le mélange gazeux peuvent être piégées par effet cryogénique en dehors du laser. Parmi ces molécules, on peut citer, par exemple, CCl₄, CF₄, HF.

L'élimination des molécules indésirables nécessite un contrôle précis de la température d'un piège cryogénique. Cette température varie en fonction des composés à éliminer et donc en fonction des molécules initialement présentes dans le mélange du milieu actif.

Le tableau I ci-dessous indique, à titre d'exemple, pour un certain nombre de molécules actives, les gaz purs pouvant être apportés au mélange pour le régénérer, et la température d'un cryostat permettant de piéger les molécules indésirables.

**TABLEAU I**

| Molécules actives | XeCl | XeF | ArF | KrF |
|---|---|---|---|---|
| Gaz purs apportés au mélange actif | | | | |
| Ar | | | * | |
| Kr | | | | * |
| Xe | * | * | | |
| F2 | | * | * | * |
| HCl | * | | | |
| Ne | * | * | * | * |
| Température du cryostat | 130°K | 130°K | 90°K | 100°K |

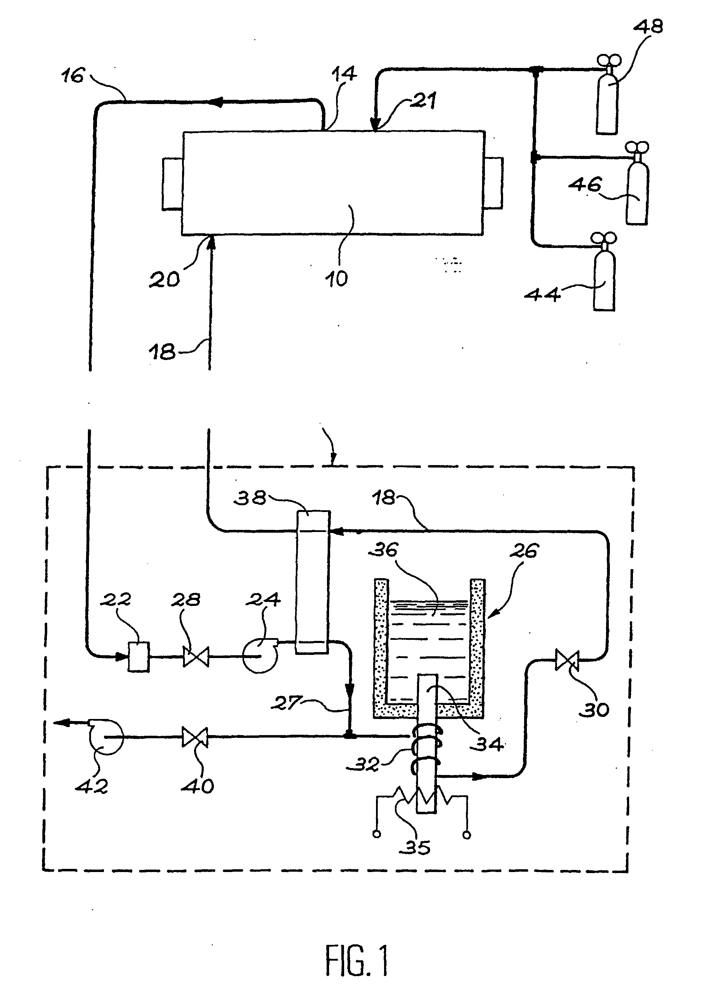

La figure 1 annexée illustre un exemple particulier de réalisation d'un purificateur de gaz de type connu, associé à un laser à gaz.

La référence 10 de la figure désigne une enceinte du laser contenant un milieu actif amplificateur sous la forme d'un mélange de gaz. La référence 12 désigne un purificateur à piège cryogénique relié à l'enceinte 10 afin d'en régénérer le mélange gazeux.

Une sortie 14 de l'enceinte 10 est reliée au purificateur 12 par une conduite 16. Du gaz prélevé dans l'enceinte 10 traverse le purificateur 12 et, lorsqu'il est purifié, c'est-à-dire séparé de ses constituants indésirables, est réinjecté dans l'enceinte 10, par l'intermédiaire d'une conduite 18. La conduite 18 relie le purificateur 12 à une entrée de gaz 20 de l'enceinte 10.

Le purificateur 12 comporte dans l'ordre, à partir de son entrée, un filtre à poussières 22, une pompe à circulation 24 et un cryostat 26. Ces éléments sont reliés par une tubulure 27. De plus, des vannes d'isolation 28, 30 sont respectivement prévues à l'entrée et à la sortie du purificateur.

La pompe à circulation 24 permet de faire circuler le mélange gazeux en provenance de l'enceinte 10 à travers un échangeur thermique 32 du cryostat où le gaz est refroidi. Le gaz est refroidi au moyen d'un noyau 34, conducteur thermique, dont une première extrémité plonge dans un bol à azote liquide 36. Une deuxième extrémité du noyau 34 est équipée d'une résistance électrique chauffante 35 qui permet d'ajuster précisément un équilibre thermique du noyau et donc la température des gaz traversant l'échangeur thermique 32.

Le cryostat réalise un piégeage des impuretés du mélange gazeux par condensation et cristallisation partielle de ces impuretés dans la partie basse de la tubulure 27.

Un échangeur de chaleur à contre courant 38 est également prévu entre la sortie des gaz du purificateur 12 et l'entrée des gaz. Cet échangeur permet de prérefroidir le gaz à purifier en récupérant au moins une partie de l'enthalpie du gaz froid purifié.

Enfin, une vanne d'extraction 40 et une pompe à vide 42 sont prévues pour la vidange du purificateur 12.

Périodiquement, les vannes d'isolation 28, 30 du purificateur 12 sont fermées pour isoler le purificateur 12 de l'enceinte laser 10. La partie de la tubulure entre les vannes est alors réchauffée pour permettre l'évaporation et l'extraction des résidus d'impuretés accumulés, au moyen de la pompe à vide.

Une deuxième entrée 21 de l'enceinte laser 10 est reliée à des bombonnes 44, 46 et 48 contenant respectivement du gaz rare, du gaz de composés halogènes et du gaz tampon. Ces bombonnes permettent d'injecter dans l'enceinte 10 du mélange gazeux neuf.

Un dispositif de ce type est connu et disponible dans le commerce. On peut se reporter à ce sujet aux documents [1] et [2] et [3] dont les références sont indiquées à la fin de la présente description.

Il convient de préciser que les installations du type décrit ci-dessus ne sont pas intégrées aux lasers mais sont disponibles en tant qu'équipement accessoire.

Un certain nombre d'obstacles empêchent en effet d'intégrer directement les équipements cryogéniques de purification dans le dispositif laser.

Un premier obstacle est lié aux vibrations émises par les pompes de vidange et de circulation. Ces vibrations sont en effet susceptibles de perturber la stabilité du faisceau laser.

De plus, un système complet incluant un laser et un équipement de purification s'avère particulièrement encombrant et peu transportable.

Enfin, il s'avère que le coût global d'un tel système complet est très élevé, notamment en raison de la complexité du dispositif de purification.

Par ailleurs, les dispositifs de purification conformes à la figure 1 présentent un certain nombre de difficultés liées à la circulation des gaz provenant de l'enceinte laser. En effet, les tubulures du purificateur doivent être équipées de moyens mécaniques et électromécaniques de contrôle des pressions et des débits des gaz.

De plus, les pompes utilisées pour mettre en circulation les gaz doivent être conçues spécialement pour supporter les gaz corrosifs du mélange actif et doivent être capables de fonctionner dans un domaine de pressions allant du vide jusqu'à 10 bars environ.

Ces contraintes contribuent également à augmenter le coût des purificateurs.

Le document [4], dont la référence est également indiquée à la fin de la description, décrit un autre type de purificateur de gaz pour laser dans lequel les impuretés sont liquéfiées par réduction de la pression du mélange de gaz. La réduction de pression est effectuée en plusieurs étapes. Le passage du gaz dans le purificateur, lors des étapes de réduction de pression, est provoqué par un jeu alterné de pompes et de soupapes.

Ainsi, des difficultés semblables à celles déjà évoquées, apparaissent avec le dispositif décrit dans le document [4].

### Exposé de l'invention

Un but de la présente invention est de proposer un dispositif de laser à gaz intégrant des moyens de purification du ou des gaz du mélange actif du laser, et ne présentant pas les difficultés mentionnées ci-dessus.

Un but est en particulier de proposer un tel dispositif qui soit complet et autonome, et qui présente un encombrement réduit.

Un but est aussi de proposer un tel dispositif dans lequel des vibrations et bruits parasites dus à des pompes à gaz sont éliminées.

Un but est encore d'éviter une tubulure et des conduites encombrantes pour relier l'enceinte à gaz du laser aux moyens de purification.

Un autre but est de proposer un dispositif permettant d'augmenter de façon importante, l'intervalle de temps entre les interventions de maintenance.

Enfin, un but est de proposer un dispositif simple, fiable, et peu coûteux.

Pour atteindre ces buts, l'invention a plus précisément pour objet un dispositif de laser à gaz conformément à la revendication 1.

On entend par communication à libre échange de gaz une communication dans laquelle aucune circulation des gaz n'est imposée.

De façon plus précise, dans le cas de l'invention, l'échange des gaz a lieu de façon naturelle par des phénomènes physiques tels que la pesanteur, la diffusion et le déplacement Brownien des particules, sans exercer de forces extérieures sur les gaz.

Selon des aspects particuliers de l'invention, les moyens de purification des gaz peuvent comporter un cryostat et/ou un piège catalytique permettant de retenir les impuretés et les composantes indésirables du gaz ou du mélange gazeux du laser.

Par ailleurs, selon une réalisation particulière du dispositif de l'invention, l'enceinte laser peut présenter un ou plusieurs appendices, amovibles ou non, connectés sur l'enceinte par l'intermédiaire de vannes d'isolation. Ces appendices contiennent chacun un ou plusieurs moyens de purification de gaz.

Le dispositif de l'invention peut comporter en outre une ou plusieurs sources de gaz actif propre reliées à l'enceinte laser. De préférence, ladite source est reliée en libre échange avec l'enceinte.

L'invention concerne également un procédé de purification d'une enceinte de laser à gaz conformément à la revendication 11.

D'autres caractéristiques et avantages de l'invention ressortiront de la description qui va suivre, en référence aux figures des dessins annexés.

Cette description est donnée à titre purement illustratif et non limitatif.

### Brève description des figures

La figure 1, déjà décrite, est une vue schématique simplifiée d'un laser à gaz équipé d'un purificateur de gaz de type connu.

La figure 2 montre de façon schématique un dispositif à laser correspondant à une mise en oeuvre particulière de l'invention.

Les figures 3 et 4 sont des vues partielles à plus grande échelle montrant des appendices de l'enceinte laser du dispositif de la figure 2, ces appendices comportant des moyens çryogéniques de purification des gaz.

La figure 5 est une vue partielle à plus grande échelle, montrant un appendice de l'enceinte laser du dispositif de la figure 2, l'appendice comportant un piège catalytique.

Les figures 6 et 7 sont des vues partielles à plus grande échelle montrant la réalisation d'un appendice d'apport de gaz du dispositif de la figure 2.

### Description détaillée de modes de mise en oeuvre de l'invention

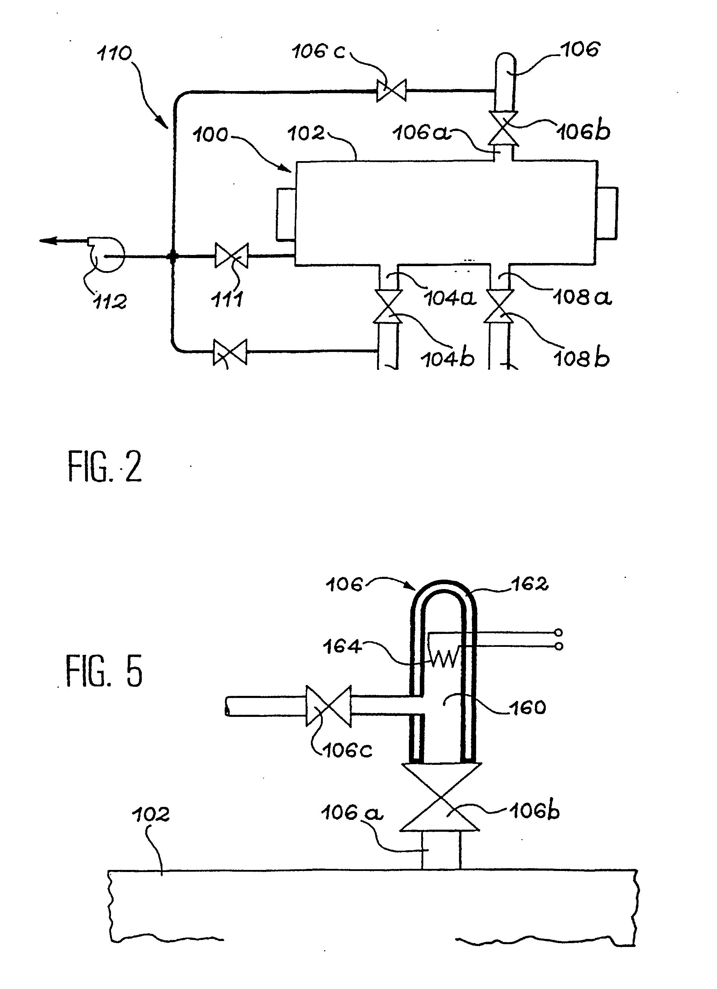

La figure 2 est une vue d'ensemble d'un dispositif laser conforme à l'invention.

Le dispositif laser comporte une enceinte laser 100 contenant un mélange de gaz qui constitue le milieu actif amplificateur. La nature du mélange dépend du type de laser et on peut se reporter à ce sujet à la description de l'art antérieur qui précède.

L'enceinte laser 100 est formée d'un corps principal 102 sur lequel sont raccordés un premier, un deuxième et un troisième appendices 104, 106 et 108. Chaque appendice est relié de façon amovible ou non au corps principal au moyen d'un raccord 104a, 106a, 108a et par l'intermédiaire d'une vanne d'isolation 104b, 106b, 108b.

Dans l'exemple de réalisation de la figure 2, les premier et deuxième appendices 104 et 106 contiennent respectivement un piège cryogénique et un piège catalytique thermique.

Ces pièges, dont une description plus détaillée est donnée dans la suite du texte, constituant des moyens de purification des gaz.

Le troisième appendice 108 constitue une source de gaz permettant d'apporter du gaz neuf à l'enceinte laser 100.

Un système de vidange 110 comporte une pompe à vide 112 et est relié aux premier et deuxième appendices et au corps principal 102 de l'enceinte. Ce système est prévu pour purger le dispositif laser, lors d'une intervention de maintenance.

On observe que le système de vidange 110 comporte des conduites reliées aux premier et deuxième appendices par des vannes d'extraction 104c et 106c et est relié au corps 102 de l'enceinte par une vanne d'extraction 111.

Les vannes d'extraction 104c, 106c et 111 sont fermées et la pompe à vide 112 est arrêtée en fonctionnement normal.

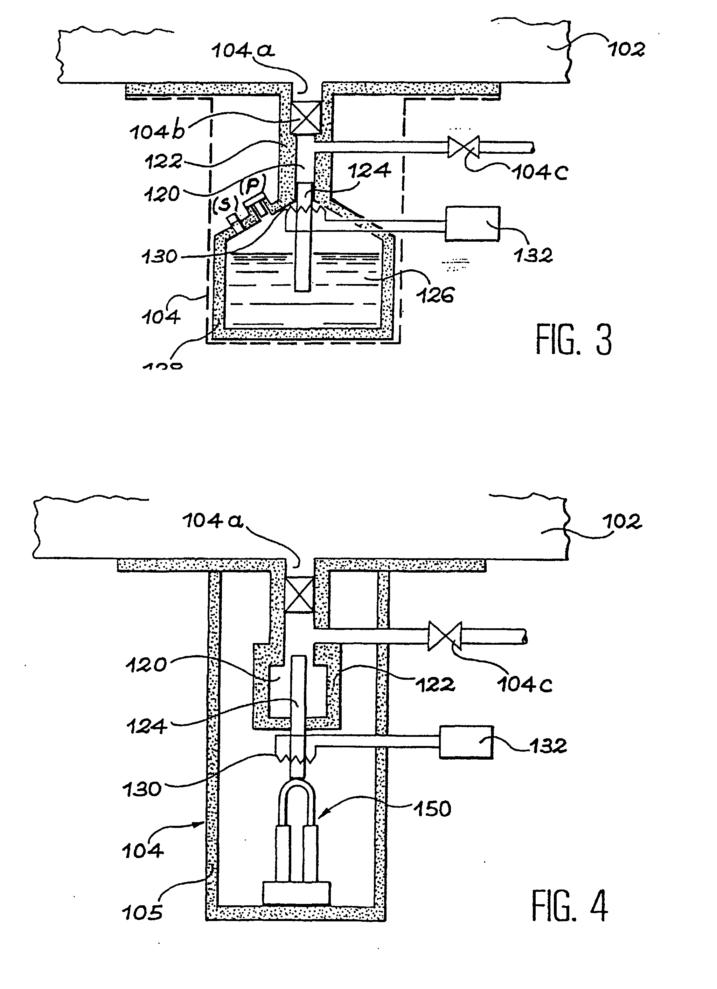

La figure 3 montre, de façon schématique, une réalisation particulière du premier appendice 104 à piège cryogénique.

Sur la figure 3 les références 104a, 104b, 104c correspondent respectivement au raccord reliant l'appendice 104 au corps 102 de l'enceinte laser, à la vanne d'isolation et à la vanne d'extraction de l'appendice.

L'appendice cryogénique 104 comprend une chambre 120, délimitée par une paroi 122 en un matériau isolant thermique et dans laquelle plonge une première extrémité d'un doigt 124, en un matériau conducteur thermique tel que du cuivre ou de l'aluminium.

La chambre froide 120 forme avec le doigt 124 un piège cryogénique.

Une autre extrémité du doigt 124 plonge dans un bain d'azote liquide 126 qui constitue une source froide. L'azote liquide est contenu dans un réservoir 128, également en un matériau isolant thermique. Le réservoir 128 est de préférence fermé pour éviter une condensation de l'humidité. Il est cependant pourvu d'une soupape S pour limiter la pression dans l'enceinte et d'un orifice P permettant le remplissage du réservoir avec du fluide cryogénique.

Une résistance électrique de chauffage 130 en contact thermique avec le noyau 124 est parcourue par un courant piloté par un dispositif électronique extérieur 132. La résistance électrique de chauffage 130 permet d'ajuster avec précision la température du doigt 124 en fonction des composantes du mélange gazeux à piéger.

Lorsque la vanne d'isolation 104b est ouverte, le gaz contenu dans le corps principal 102 de l'enceinte laser peut diffuser dans la chambre 120 de l'appendice cryogénique par libre déplacement des molécules gazeuses. L'ensemble du corps 102 de l'enceinte et l'appendice sont alors à une même pression.

Dans la chambre 120, au contact du doigt 124 froid, les halogénures ou autres impuretés du mélange gazeux sont liquéfiés et/ou cristallisés.

Compte tenu du gradient thermique existant entre le corps de l'enceinte et la chambre 120, c'est-à-dire le fond du piège cryogénique, les halogénures restent à proximité du point froid que forme le doigt 124 au fond du piège.

Les impuretés sont maintenues au fond du piège (chambre 120) par l'effet de la pesanteur et/ou par effet de densité, selon leur état physique. Le piège est tourné de préférence vers le bas pour éviter toute convection susceptible de produire une charge thermique excessive.

Par ailleurs le doigt 124 froid du piège cryogénique génère un effet de stratification thermique qui permet en outre une économie d'énergie importante car seules les pertes thermiques par conduction sont à considérer en l'absence de convection.

De façon périodique, l'appendice cryogénique 104 est nettoyé afin d'en extraire les halogénures et impuretés indésirables qui s'y sont accumulés.

Pour le nettoyage, la vanne d'isolation 104b est fermée pour isoler la chambre 120 de l'appendice 104 du corps 102 de l'enceinte laser, et la vanne d'extraction 104c est ouverte. Un réchauffement naturel, par élimination de la source froide (azote), et/ou provoqué, par exemple au moyen de la résistance chauffante 130, permet l'évaporation des halogénures et autres impuretés.

Un pompage au moyen de la pompe à vide 112 visible à la figure 2, permet alors d'évacuer ces halogénures et autres impuretés indésirables par la vanne d'extraction 104c.

La figure 4 montre une variante de réalisation du premier appendice 104 à piège cryogénique.

Les parties de la figure 4 identiques ou similaires à des parties de la figure 3 portent les mêmes références. On peut ainsi, à leur sujet, se reporter à la description qui précède.

Dans l'appendice 104 de la figure 4, une extrémité d'un doigt 124, conducteur thermique, s'étend dans une chambre 120 qui peut être mise en communication avec l'enceinte laser en ouvrant la vanne d'isolation 104a.

Une autre extrémité du doigt 124 est en contact avec un cryoréfrigérateur 150 et avec une résistance électrique 130.

Le cryoréfrigérateur 150 peut être du type Gifford Mac-Mahon, de type Stirling, de type à détente de Joule Thomson, ou encore de type à tube à gaz pulsé, par exemple.

Le doigt froid 124, en contact avec le cryoréfrigérateur 150 et la résistance électrique chauffante 130, est maintenu en équilibre thermique à une température qui peut être ajustée en faisant varier le courant électrique qui traverse la résistance chauffante. Comme pour l'appendice de la figure 3, la température du doigt froid est ajustée en fonction des composantes du mélange de gaz que l'on souhaite piéger.

On observe sur la figure 4 que la chambre 120 est délimitée par une première paroi 122 en un matériau isolant thermique.

De même l'ensemble de l'appendice 104 est délimité par une deuxième paroi 105, également en un matériau isolant thermique.

De plus, de la mousse isolante thermique ou du vide ou tout autre agent isolant peuvent être introduits entre les première et deuxième parois 122, 105.

Comme dans le dispositif de la figure 3, les halogénures et impuretés sont piégés dans la chambre 120. Ils sont éliminés comme dans l'exemple précédent par réchauffement naturel et/ou provoqué (par la résistance chauffante 130) à partir de la vanne 104C.

Le dispositif de la figure 4 à cryoréfrigérateur présente par rapport au dispositif de la figure 3 l'avantage de pouvoir être scellé et de fonctionner de façon autonome sans intervention extérieure. Il n'est en effet pas nécessaire de l'alimenter régulièrement avec du liquide cryogénique (azote).

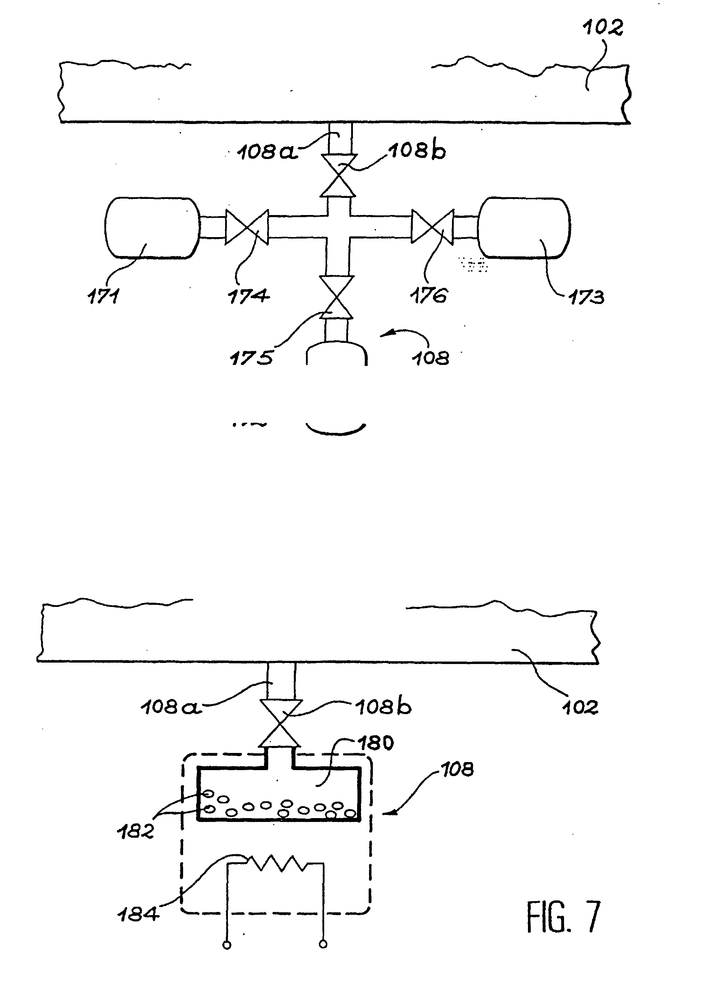

La figure 5, décrite ci-après, représente de façon schématique une réalisation du deuxième appendice 106 du dispositif laser. Le deuxième appendice 106 constitue un piège thermique catalytique.

De la même façon que les halogènes et/ou impuretés indésirables peuvent être conservés dans un piège cryogénique tel que décrit précédemment, ils peuvent être également dissociés et filtrés par un effet thermique et catalytique.

Le deuxième appendice 106 comporte une chambre 160 contenant un matériau catalyseur tel que le platine ou le titane. Par exemple, la chambre est délimitée par une paroi 162 en l'un de ces matériaux ou recouverte intérieurement de l'un de ces matériaux.

Une résistance électrique de chauffage 164 représentée très schématiquement est prévue pour chauffer le catalyseur.

Le deuxième appendice 106 est relié au corps 102 de l'enceinte laser par un raccord 106a et par l'intermédiaire d'une vanne d'isolation 106b.

Lorsque la vanne d'isolation 106b est ouverte, la chambre 160 de l'appendice 106 est en communication à libre échange de gaz avec le corps 102 de l'enceinte.

Les molécules du mélange gazeux peuvent alors librement diffuser dans la chambre 160 du deuxième appendice.

Là, comme indiqué ci-dessus, le catalyseur chaud permet de dissocier des molécules de gaz polluant le milieu actif.

Périodiquement, le deuxième appendice 106b peut également être purgé afin d'en extraire les gaz indésirables. La vanne d'isolation 106b est alors fermée et la vanne d'extraction 106c est ouverte pour effectuer un pompage.

Il convient de préciser que le piège catalytique thermique est adapté en particulier pour les lasers de type CO₂ de forte puissance. Il est cependant utilisable pour d'autres types de laser.

La figure 6 montre un exemple de réalisation d'une source de gaz actif du dispositif de l'invention sous la forme d'un troisième appendice 108.

Contrairement au cryostat ou au piège catalytique décrits précédemment, la source de gaz actif ne constitue pas un moyen de purification de gaz au sens de la présente invention. La source de gaz permet par contre d'apporter dans l'enceinte 102 du gaz neuf et exempt de tout composé indésirable.

Le troisième appendice 108 comporte trois bouteilles de gaz sous pression 171, 172 et 173, qui contiennent respectivement des gaz halogènes, du gaz rare et du gaz tampon.

L'appendice 108 est relié au corps principal 102 de l'enceinte laser par un raccord 108a et par l'intermédiaire d'une vanne d'isolation 108b.

On observe également que chaque bouteille de gaz est équipée d'une vanne de dosage 174, 175, 176 qui lui est propre.

Selon une variante, les trois bouteilles du gaz sous pression peuvent être remplacées par une seule bouteille contenant un mélange de gaz, correspondant au mélange de gaz contenu dans l'enceinte.

Selon encore une variante, l'appendice peut comporter simplement une seule bouteille contenant un gaz halogène d'apport.

L'apport du gaz neuf permet en particulier de compenser tout ou partie de la perte en composé halogène due à la formation d'impuretés sous la forme d'halogénures de carbone ou de métaux.

En outre, des moyens de commande, non représentés sur la figure, reliés aux vannes de dosage, peuvent être prévus pour piloter la quantité de gaz introduite dans l'enceinte. Ces moyens peuvent comporter, par exemple, une boucle optoélectronique de contrôle du faisceau laser, prévue pour mesurer l'énergie émise et piloter l'apport de gaz neufs en fonction de cette mesure.

La figure 7 montre de façon schématique un autre exemple de réalisation d'une source de gaz actif d'apport.

Selon cette variante, l'appendice 108, correspondant à la source de gaz, comporte une enceinte de dégazage 180 contenant des pastilles 182 capables de libérer un gaz lorsqu'elles sont chauffées.

Les pastilles 182 sont en un matériau poreux, tel que des céramiques, contenant dans les pores du gaz piégé. Il s'agit en l'occurrence d'un ou de plusieurs gaz d'apport tels qu'évoqués précédemment.

Une résistance chauffante 184 est prévue pour chauffer de façon contrôlée les pastilles et d'en extraire ainsi une quantité contrôlée de gaz d'apport. La résistance chauffante peut, à cet effet, être pilotée par des moyens d'asservissement non représentés sur la figure.

A titre d'illustration de la réalisation de la source de gaz selon la figure 7, on peut se reporter aux documents [5], [6] et [7] dont la référence est indiquée à la fin de la présente description.

On observe enfin que l'appendice 108 est relié au corps de l'enceinte par un raccord 108a et par l'intermédiaire d'une vanne d'isolation 108b.

Finalement, grâce à l'invention, et en particulier grâce à la réalisation d'un dispositif unique intégrant à la fois une enceinte laser et des appendices comprenant des moyens de purification et/ou d'apport de gaz, il est possible d'éliminer toute les contraintes liées aux pompes de circulation et aux tubulures existant sur des dispositif connus (où l'enceinte laser et les moyens de purification se présentent sous la forme d'unités indépendantes.

Un dispositif à laser conforme à l'invention est économique à fabriquer, non seulement en raison de l'absence de circuit de liaison entre l'enceinte laser et les moyens de purification, comprenant notamment une pompe de circulation et des tubulures de liaison, mais aussi parce que l'utilisation de moyens de purification intégrés simplifie la fabrication de l'enceinte même.

En effet, le piège cryogénique intégré retient l'humidité contenue dans l'enceinte laser dès la première utilisation du laser. L'humidité vient se transformer en glace dans le piège cryogénique.

Ainsi, lors de la réalisation de l'enceinte laser, les opérations d'étuve et de dessiccation de l'enceinte laser peuvent être accélérées.

Par ailleurs, l'absence du circuit de liaison permet d'augmenter la fiabilité du laser.

Il convient enfin de souligner que bien que l'invention ait été décrite à l'aide d'un exemple particulier dans lequel le dispositif laser comporte une pluralité de moyens de purification ou d'apport de gaz, une réalisation plus simple du dispositif peut ne comprendre qu'une partie des équipements décrits.

### Documents cités

[1] << The GP-2000X Series Excimer Laser Gas Purifiers >> - Oxford Lasers (document commercial) 1990
[2] << Cryogenic Processing Of Excimer Laser Gas Mixtures >> - Oxford lasers (document commercial) 1991
[3] EP-A-0 430 411
[4] DE-A-3 130 588
[5] GB-A-9 124 948 (WO 93/11065)
[6] GB-A-9 011 535
[7] US-A-5 363 396

## Revendications

1. Dispositif de laser à gaz comportant :
- une enceinte laser (100) contenant au moins un gaz actif, et
- des moyens de purification du gaz en communication à libre échange de gaz avec ladite enceinte (100) directement par l'intermédiaire d'au moins une vanne d'isolation.

2. Dispositif selon la revendication 1 dans lequel les moyens de purification de gaz comportent un cryostat (120, 124, 126, 150).

3. Dispositif selon la revendication 1 dans lequel les moyens de purification de gaz comportent un piège catalytique (162, 164).

4. Dispositif selon l'une quelconque des revendications précédente comportant en outre au moins une source (108) de gaz actif propre reliée à l'enceinte laser.

5. Dispositif selon la revendication 4 dans lequel la source de gaz propre (108) comporte au moins une bouteille de gaz (171, 172, 173).

6. Dispositif selon la revendication 4 dans lequel la source de gaz propre (108) comporte un diffuseur contrôlable (180, 182, 184).

7. Dispositif selon la revendication 2 dans lequel le cryostat comporte un système de refroidissement à azote liquide (126).

8. Dispositif selon la revendication 2 dans lequel le cryostat comporte un cryoréfrigérateur (150).

9. Dispositif selon la revendication 1 dans lequel l'enceinte (100) présente au moins un appendice (104, 106), contenant au moins un moyen de purification de gaz et connecté sur l'enceinte par l'intermédiaire d'une vanne d'isolation (104a, 106a).

10. Dispositif selon la revendication 9 dans lequel l'appendice (104, 106) équipé d'un système de purge (104c, 106c)

11. Procédé de purification d'une enceinte de laser à gaz (100) dans lequel on met en communication à libre échange de gaz l'enceinte de laser (100) et au moins un moyen de purification de gaz directement par l'intermédiaire d'au moins une vanne d'isolation.

## Claims

1. Gas laser device comprising:
- a laser chamber (100) containing at least one active gas, and
- gas purification means in communication with free exchange of gas with the said chamber (100), directly by means of at least one isolating valve.

2. Device according to claim 1, in which the gas purification means comprise a cryostat (120, 124, 126, 150).

3. Device according to claim 1, in which the gas purification means comprise a catalytic trap (162, 164).

4. Device according to any one of the previous claims, also comprising at least one built-in active gas source (108) connected to the laser chamber.

5. Device according to claim 4, in which the built-in gas source (108) comprises at least one gas cylinder (171, 172, 173).

6. Device according to claim 4, in which the built-in gas source (108) comprises a controllable diffuser (180, 182, 184).

7. Device according to claim 2, in which the cryostat comprises a cooling system with liquid nitrogen (126).

8. Device according to claim 2, in which the cryostat comprises a cryorefrigerator (150).

9. Device according to claim 1, in which the chamber (100) comprises at least one appendix (104, 106) containing at least one gas purification means and connected to the chamber through an isolating valve (104a, 106a).

10. Device according to claim 9, in which the appendix (104, 106) is fitted with a purge system (104c, 106c).

11. Purification process for a gas laser chamber (100) in which the laser chamber (100) is put into communication with free exchange of gas with at least one gas purification means, directly by means of at least one isolating valve.

## Patentansprüche

1. Gaslaservorrichtung, umfassend:
- einen Laserbehälter (100), der wenigstens ein aktives Gas enthält, und
- Gasreinigungseinrichtungen, durch wenigstens ein Trennventil direkt mit dem Behälter (100) verbunden, für einen freien Gasaustausch.

2. Vorrichtung nach Anspruch 1, bei der die Gasreinigungseinrichtungen einen Kryostat (120, 124, 126, 150) umfassen.

3. Vorrichtung nach Anspruch 1, bei der die Gasreinigungseinrichtungen eine katalytische Falle (162, 164) umfassen.

4. Vorrichtung nach einem der vorangehenden Ansprüche, die außerdem wenigstens eine Quelle (108) für reines aktives Gas umfasst, verbunden mit dem Laserbehälter.

5. Vorrichtung nach Anspruch 4, bei der die Reingas-Quelle (108) wenigstens eine Gasflasche (171, 172, 173) umfasst.

6. Vorrichtung nach Anspruch 4, bei der die Reingas-Quelle (108) einen steuerbaren Diffuser (180, 182, 184) umfasst.

7. Vorrichtung nach Anspruch 2, bei der der Kryostat ein Kühlsystem mit flüssigem Stickstoff (126) umfasst.

8. Vorrichtung nach Anspruch 2, bei der der Kryostat eine Tieftemperatureinrichtung (150) umfasst.

9. Vorrichtung nach Anspruch 1, bei der der Behälter (100) wenigstens einen Ansatz (104, 106) aufweist, der wenigstens eine Gasreinigungseinrichtung enthält und mit dem Behälter durch ein Trennventil (104a, 106a) verbunden ist.

10. Vorrichtung nach Anspruch 9, bei der der Ansatz (104, 106) mit einem Entleerungssystem (104c, 106c) ausgerüstet ist.

11. Reinigungsverfahren eines Gaslaserbehälters (100), bei dem man zwischen dem Laserbehälter (100) und wenigstens einer Gasreinigungseinrichtung durch wenigstens ein Trennventil direkt die Verbindung für den freien Gasaustausch herstellt.
